# EUROPEAN PATENT APPLICATION

(11) **EP 2 177 538 A1**
(43) Date of publication of application: **21.04.2010**
(21) Application number: 08018115.9
(22) Date of filing: 16.10.2008
(51) Int. Cl.: C08B 15/00, C08B 11/193, C08B 11/20

(54) **Cellulose ethers having little swelling and process for their production**

(71) Applicant: Dow Global Technologies Inc., Midland, MI 48674 (US)
(72) Inventor: Brackhagen, Meinolf, 29664 Walsrode (DE); Kiesewetter, René, 29649 Wietzendorf (DE); Grote, Carsten, 29683 Bad Fallingbostel (DE); Kull, Arne, 29699 Bomlitz (DE); Schroen, Maarten, 29664 Walsrode (DE)
(74) Representative: Polypatent

(57) **Abstract**

The present invention relates to a novel process for the preparation of a cellulose ether composition comprising at least one cellulose ether and a crosslinking agent, comprising the steps:
a) providing a starting material comprising at least one cellulose ether which has a total DS (alkyl) of 1.40 to 2.00, an MS (hydroxyethyl) of 0.21 to 1.05 and a total substitution degree DS+MS of at least 1.85,
b) adding at least one crosslinking agent and optionally water to the starting material and mixing in said crosslinking agent and optionally water, in an amount such that a water-moist cellulose ether composition is obtained, which composition has a moisture content of at least 60% and to 85% by weight, based on the total mass of the water-moist cellulose ether composition, and
c) drying and grinding of the cellulose ether composition.

## Description

The invention relates to a novel composition comprising at least one cellulose ether and a crosslinking agent and having little surface swelling and, in most cases, improved delay time of solubility, a process for the preparation thereof and the use thereof in dispersion-bound construction material systems, preferably in dispersion-bound coating materials.

Owing to their outstanding properties and their physiological safety, cellulose derivatives are widely used, for example as thickeners, adhesives, binders and dispersants, water retention agents, protective colloids, stabilizers and suspending agents, emulsifiers and film binders.

One application for cellulose derivatives is the use as thickeners in emulsion paints. In particular, hydroxyethylcellulose (HEC), but also methylhydroxyethylcellulose (MHEC) or methylhydroxypropylcellulose (MHPC), is used as a thickener for emulsion paints.

With a suitable choice of the degrees of substitution, MHEC and MHPC are insoluble in hot water and can therefore be purified in the preparation to remove salt and other water-soluble by-products by washing with hot water. In contrast, commercially available HEC are soluble in hot water and therefore cannot be purified with hot water to remove salt and other water-soluble by-products.

With the use of these cellulose derivatives, the user frequently adopts a procedure in which first a suspension of the cellulose derivative in water is prepared, which suspension is then mixed with further constituents of the paint formulation. For this purpose, the dispersion of the cellulose derivative must be stirrable and pumpable.

To ensure that the cellulose derivatives do not have a spontaneous thickening effect on contact with water, they are generally prepared with delayed dissolution for use in emulsion paints.

This delayed dissolution is generally brought about by temporary crosslinking with a dialdehyde, such as, for example, glyoxal. The cellulose derivative is initially water-insoluble as a result of the crosslinking but dissolves in water as a function of the temperature and the pH of the suspension and then has a thickening effect (cf. Ullmann's Encyclopaedia of Technical Chemistry, volume A5, pages 472-473). Known cellulose ethers having a delayed dissolution by temporary crosslinking with a dialdehyde are some MHECs and MHPCs. However, an improvement of the delay time of solubility would still be desired due to the importance of this property in paint formulation processes.

In addition to the delayed dissolution, the water absorption of the cellulose derivative influences the stirrability and pumpability of a cellulose derivative suspension. Here, water is bound physically by the cellulose derivative as a result of surface swelling of the cellulose derivative, without the cellulose derivative going into solution. If the surface swelling of the cellulose derivative is high, the total amount of water of the suspension may be bound in a specific case and the stirrability and pumpability of the cellulose derivative suspension are lost.

Although some MHECs have delayed dissolution, they swell strongly in aqueous suspension. The stirrability and pumpability of the MHEC suspensions are therefore lost after only a short time.

A further disadvantage of cellulose derivatives having high surface swelling is when mixing them with water the formation of lumps, which arise due to the formation of a gluey layer at the surface of the cellulose particles. Although the tendency of lumping can be reduced by adding glyoxal it is observed that above pH 8 the crosslinking is annulled and lumping may occurs.

It is true that the surface swelling of cellulose derivatives can be subsequently influenced by additive treatment steps. Thus, for example, JP 48-34961 describes a thermomechanical treatment of granular methylcellulose derivatives (methylcellulose (MC), MHEC, MHPC) at 60 to 130°C over a period of 4 to 15 hours in a closed mixing container at 50 to 200 rpm. However, this treatment process is associated with very complex apparatus and is time-consuming and energy-consuming. The dispersibility of 2% by weight of cellulose ether and water is improved by this complicated process. However, no statement is made about the behaviour at higher concentrations, and the process can be used only in the case of a certain granulometry of the products since the particle size must be between 100 and 10 mesh (0.152 to 1.68 mm, Tyler mesh size).

The use of methylhydroxyethylhydroxypropylcellulose (MHEHPC) in emulsion paints is known to the person skilled in the art. US 3,873,518 describes MHEHPC having a methoxy content of 6 to 12.5% by weight (i.e. DS_{Me} = 0.396 to 1.262), a hydroxyethoxy content of 10 to 22% by weight (i.e. MS_{HE} = 0.159 to 1.087) and a hydroxypropoxycontent of 14 to 32% by weight (i.e. MS_{HP} = 0.381 to 1.286) and the use thereof as a thickener in emulsion paints.

EP 0 598 282 describes MHEHPC having a degree of substitution by hydroxyalkyl groups of less than 0.7, especially less than 0.6, in particular less than 0.3, and a degree of substitution of methyl groups of 1.6 to 2.5, in particular 1.8 to 2.4, as a thickener for paint strippers.

EP 0 120 430 describes MHEHPC having a degree of methylation of 0.9 to 2.1, a degree of hydroxyethylation of 0.2 to 0.5 and a degree of hydroxypropylation of 0.08 to 0.4.

Said patents do not disclose how cellulose ethers, in particular MHEHPC, having little surface swelling can be prepared.

Cellulose ethers are generally obtainable by alkalizing cellulose with aqueous alkali metal hydroxide solution, allowing the alkalized cellulose to react with one or more alkylene oxides and/or one or more alkyl halides and separating off the resulting cellulose ether from the reaction mixture, optionally purifying it and drying and comminuting it.

Cellulose ethers having delayed dissolution are prepared, for example according to the prior art, by adding glyoxal to the cellulose ether separated off from the reaction mixture and purified, prior to grinding and drying, and crosslinking said cellulose ether. EP 1 316 563 describes such a process for delaying the dissolution. According to said patent, the water content of the cellulose ether is adjusted to a value of 50% by weight. No statement is made regarding the swelling of the products in aqueous dispersion.

Etherification processes for the preparation of mixed cellulose ethers are generally part of the prior art and are described, for example, in EP 1 180 526 and EP 1 279 680. No information is given regarding the swelling properties of the cellulose ethers.

EP1127895A1 discloses the moistening of the water-moist filter cake of an MHEC or MHEHPC having a water content of 40 to 65% by weight to a water content of 65 to 78% by weight and subjecting said filter cake to combined grinding and drying in a screenless high-speed impact mill. By means of this grinding process, it is possible to prepare MHEC and MHEHPC where more than 65% by weight thereof pass through a 63 µm sieve. However, this patent application gives no indication as to how the swelling of cellulose ethers can be reduced. Furthermore, EP1127895 does not reveal which degrees of substitution are advantageously used for achieving little surface swelling. Furthermore, the dry-milling process using a high-speed impact mill described therein results in products having a relative high surface swelling.

According to EP1316563, it is proposed to treat cellulose ethers, for example MHEC and CMC, at water contents of 40 to 80%, with a mixture of glyoxal and a buffer substance. In the Examples a water contents of 50% is recommended. However, the products thus prepared have high surface swelling.

Thus, there are no known cellulose derivatives to date which have little surface swelling in aqueous dispersion without additional subsequent treatment steps of the pulverulent product.

It was therefore an object of the present invention to provide a cellulose derivative which has little surface swelling in aqueous dispersions even at high pH values and, optionally, has improved delay time of solubility and which can be prepared without additional subsequent treatment steps.

This object could be achieved in a surprising manner by a composition containing at least one cellulose ether and a crosslinking agent, the composition is preferably prepared by a process as described in the following. The inventive process for the preparation of a cellulose ether composition comprising at least one cellulose ether and a crosslinking agent, comprises the steps of:
a) providing a starting material comprising at least one cellulose ether which has a total DS (alkyl) of 1.40 to 2.00, an MS (hydroxyethyl) of 0.29 to 1.05, and a total substitution degree DS+MS of at least 1.85,
b) adding at least one crosslinking agent and optionally water to the starting material and mixing in said crosslinking agent and said water, in an amount such that a water-moist cellulose ether composition is obtained, which composition has a moisture content of at least 60 and up to 85% by weight, based on the total mass of the water-moist cellulose ether composition, and
c) drying and grinding of the cellulose ether composition.

The invention is therefore based on the surprising discovery that cellulose ethers having little surface swelling and, optionally, improved delay time of solubility are obtained if cellulose derivatives which have a specific substitution pattern are treated with a crosslinking agent in a special preparation process.

The alkyl substitution is described in cellulose ether chemistry in general by the DS. The DS is the average number of substituted OH groups per anhydroglucose unit. The methyl substitution is stated, for example, as DS (methyl) or DS (M). The hydroxyalkyl substitution is usually described by the MS. The MS is the average number of moles of the etherifying reagent which are bound in an ether-like manner per mole of anhydroglucose unit. The etherification with the etherifying reagent ethylene oxide is stated, for example, as MS (hydroxyethyl) or MS (HE). The etherification with the etherifying reagent propylene oxide is accordingly stated as MS (hydroxypropyl) or MS (HP).

The determination of the side groups, i.e. the MS and DS values, is effected according to the Zeisel-GC method described by G. Bartelmus and R. Ketterer in Z. Anal. Chem. 286 (1977) 161-190, i.e., a water-soluble cellulose ether is reacted with hydroiodic acid to convert substituent groups in the ether to alkyl iodide, which is quantitatively determined by gas chromatography.

In the process according to the invention the provided starting material preferably contains at least one cellulose ether selected from the group comprising an alkylhydroxyethylcellulose, in particular a methylhydroxyethylcellulose (MHEC), an ethylhydroxyethylcellulose (EHEC), a methylethylhydroxyethylcellulose (MEHEC), a methylhydroxyethylhydroxypropylcellulose (MHEHPC), an ethylhydroxyethylhydroxypropylcellulose (EHEHPC) or a methylethylhydroxyethylhydroxypropylcellulose (MEHEHPC), preferably an MHEHPC, EHEHPC or MEHEHPC. Particularly preferred hydroxyethylcellulose ethers are, e.g. MHEC, EHEC, MEHEC, MHEHPC, EHEHPC or MEHEHPC.

Here, "starting material" is understood as meaning a material containing predominantly cellulose ether. Preferably used cellulose ethers are those which are typically obtained in the preparation and after purification thereof as solvent-moist filter cakes. The preferred solvent is water. These cellulose ethers, which are also covered here by the term "starting material", usually have a moisture content of 25 to 75% by weight, based on the total mass of the starting material, after washing and separating from the washing fluid. Water-moist cellulose ethers or cellulose ether mixtures preferably used as starting material for the subsequent process steps are those which have a moisture content of 45 to 65% by weight, regardless of how the moisture content is subsequently established in process step b). These cellulose ethers can usually contain other constituents, such as, for example, NaCl and further residues of by-products from the preparation, in an amount of up to 10% by weight, based on the dry starting material. The content of pure cellulose ether or cellulose ether mixture in the starting material may therefore be in the range of 90 to 100% by weight, based on the dry starting material.

It is preferred that the starting material in the present inventive process contains or is an MHEHPC, EHEHPC or MEHEHPC having a DS (M and/or E) of 1.40 to 2.00, an MS (HE) of 0.21 to 0.50, an MS (HP) of 0.01 to 0.55, a total MS (HA) equal to MS (HE+HP) of 0.29 to 1.05, and a total substitution degree DS+MS of at least 1.85.

It is particularly preferred according to the invention, that the MHEHPC, EHEHPC, or MEHEHPC has
- a DS (M and/or E) of 1.45 to 1.80, more preferably of 1.50 to 1.70, most preferably of 1.52 to 1.68;
- an MS (HE) of 0.25 to 0.45, more preferably of 0.28 to 0.40, most preferably of 0.31 to 0.36;
- an MS (HP) of 0.03 to 0.45, more preferably of 0.06 to 0.38, most preferably of 0.07 to 0.33;
- a total MS of 0.30 to 0.90, more preferably 0.34 to 0.78, most preferably of 0.38 to 0.69; and
- a total DS+MS of 1.90 to 2.50, more preferably of 1.95 to 2.40, most preferably of 2.00 to 2.30.

In an alternative embodiment of the process according to the invention the cellulose ether is an alkylhydroxyethylcellulose, e.g. MHEC, EHEC or MEHEC having
- a (total) DS (M and/or E) of 1.40 to 2.00, preferably of 1.45 to 1.80, more preferably 1.50 to 1.70, most preferably 1.52 to 1.68;
- an MS (HE) of 0.29 to 1.05, preferably 0.30 to 0.90, more preferably 0.34 to 0.78, most preferably 0.38 to 0.69; and
- a total substitution degree DS+MS of at least 1.85, preferably of 1.90 to 2.50, more preferably of 1.95 to 2.40, most preferably of 2.00 to 2.30.

Preferably the cellulose ether composition does not comprise an ionic cellulose ether, such as carboxymethyl cellulose.

In the process according to the invention it is possible to provide starting material containing mixtures of the cellulose ethers described herein. If mixtures of cellulose ethers are provided in step a) it is preferred that more than 50% by weight, particularly preferably more than 80% by weight, most preferably more than 90% by weight, of the cellulose ethers, based on the total amount of the cellulose ethers, have the degrees of substitution as defined herein.

In the process according to the invention, the starting material as present, for example, after washing of crude cellulose ether, is brought in step b) to a moisture content ideal for the following process steps, optionally with addition of water with mixing.

The addition and the mixing in of the water are effected in step b) with apparatuses according to the prior art. Here, for example, continuously operating granulators from Lödige Process Technology (Deutschland) with or without a weir or continuously operating kneaders, for example from List AG, Arisdorf (Switzerland), or high-speed intensive mixers commercially available from Hosokawa Micron BV at Doetinchem, Holland under the trademark Schugi. or co-rotating or counterrotating twin-screw units or ribbon mixers having a horizontally or vertically arranged mixing shaft and tools can be used.

In this moistening and mixing step b), further additives and/or auxiliaries can be mixed in, in addition to the crosslinking agent. For more details on such additives and auxiliaries, see below.

The moisture content of the cellulose ether composition, which is established in step b), should be, as mentioned, at least 60 up to 85% by weight, based on the total mass of the water-moist cellulose ether composition. A moisture content of above 60 to 80% by weight is preferred. Moisture values in the range from above 60 to 75% by weight have proved to be particularly suitable. From a moisture content of 80% by weight, such a high energy input is required, based on the effects achieved, for evaporating the water during the drying in step c) that the process will become disproportionately energy-intensive.

It has proven to be particularly advantageous to add the crosslinking agent together with a certain minimum amount of a solvent for the crosslinking agent, preferably water. It is preferred according to the invention that at least 3% by weight, preferably at least 5% by weight, particularly preferably at least 10% by weight, of water, based on the dry starting material, is added together with the crosslinking agent in step b). It is possible to dispense with constrained mixing with plastication in a kneader, as is described as being necessary in DE-A 1 518 213, if a moist cellulose ether from the purification stage of the preparation process is used.

In the process according to the invention the cellulose ether composition is preferably dried in step c), prior to the grinding, to a residual moisture content of less than 35% by weight, based on the total mass of the cellulose ether composition. However, it has been found that a lower residual moisture content leads as a rule to even better results so that drying is more preferably effected to a residual moisture content of less than 20% by weight, more preferably less than 10% by weight and most preferably less than 5% by weight. The grinding and drying can also be carried out simultaneously in the form of combined grinding and drying.

Processes for grinding and drying of cellulose ethers are known, for example from the teaching of GB 2 262 527, DE 38 39 831, EP 1 127 910 and EP 1 127 895. It is possible to use various mill types, for example pinned-disc mills, bowl mills, hammer mills, screen ring mills, crossbeater mills and impact mills. The drying effect is preferably promoted by the use of gases or gas mixtures, heated to temperatures of above 80°C, preferably above 100°C, in the comminuting apparatus. The combined grinding and drying can be followed by further grinding and/or drying steps.

The grinding can be effected in a single stage, it being possible to use a screenless high-speed impact mill as the mill. However, it is preferable to comminute the dried cellulose ether composition beforehand, for example in a crusher, more than 98% by weight passing through a sieve having a mesh size of 2 mm, and then to comminute it in a mill having a sieve insert of 0.2 to 1.0 mm, preferably 0.4 to 0.6 mm, and, for example, a rigid 4-arm crossbeater as a grinding tool, at 10 000 to 20 000 rpm, e.g. 15 000 rpm. In another preferred embodiment of the invention, the dried cellulose ether composition is ground in a screenless high-speed impact mill (e.g. from Altenburger Maschinen Jäckering GmbH) with nitrogen as a heat-transfer and transport gas. A particularly preferred alternative envisages the use of the abovementioned high-speed impact mill with a steam/air mixture as heat-transfer and transport gas.

In a preferred embodiment of the process according to the invention, 0.005 to 2 % by weight, preferably 0.01 to 1.5 % by weight and particularly preferably 0.02 to 1 % by weight of crosslinking agent, calculated as anhydrous and solvent-free substance and based on the dry starting material, is added and mixed in . As mentioned, it is preferable to add the crosslinking agent together with a certain minimum amount of a solvent, preferably water, to the starting material and to mix in said crosslinking agent and said water. Apart from said preferred minimum amounts of water, the crosslinking agent may also be completely dissolved in the amount of water which is added to the starting material and mixed in step b) for establishing the moisture content.

The crosslinking agent forms a bond with the hydroxyl groups of the cellulose, which bond is reversible in aqueous solution. Dialdehydes and organosilicon compounds according to the prior art are preferably used, as described, for example, in the following patents: US 2 879 268, EP-B 1 316 563 and EP 1 452 544 or JP08183801 and DE 32 32 467.

Thus, for example, the following may be used:
a) Dialdehydes having 2 to 8 C atoms, such as, for example, glyoxal. Glyoxal is preferably used in the form of a commercially available aqueous solution of about 40% by weight.
b) Monoaldehydes having 1 to 8 C atoms, which can form full acetal bonds, for example formaldehyde.
c) Silicon compounds of the formula Si(R¹)(R²)(R³)(R⁴), in which the radicals R¹ to R⁴, independently of one another, denote aryloxy, alkoxy, acyloxy, aryl, alkyl, alkenyl, N-silyl or O-silyl. The radicals may be optionally substituted, the substituents once again independently of one another, denoting aryloxy, alkoxy, acyloxy, aryl, alkyl, alkenyl, N-silyl or O-silyl.
   i) Preferred compounds falling under the formula Si(R¹)(R²)(R³)(R⁴) are those in which at least 2 of the 4 substituents are optionally substituted alkoxy or acyloxy groups and 0 to 2 substituents are optionally substituted alkyl groups having 1 or 2 C atoms. Examples of preferred compounds are:
      - ethyltriacetoxysilane
      - methyltriacetoxysilane
      - methyltrimethoxysilane
      - tetraacetoxysilane
   ii) Furthermore preferred are those polymeric siloxanes which have at least 2, optionally substituted, alkoxy or acyloxy substituents in the polymer chain.
      Examples of such compounds are:
      - H₃C(OCH₃)₂Si-O-Si(OCH₃)₂CH₃, (R1= CH₃, R2=R3= OCH₃, R4= OSi(OCH₃)₂CH₃)
      - H₃C-Si(CH₃)(OC₂H₅)-[Si(CH₃)(OC₂H₅)]ₙ-CH₃ (with n = 1-1000)
      - H₃C-Si(CH₃)(OOC₂H₃)-[Si(CH₃)(OOC₂H₃)]ₙ-CH₃ (with n = 1-1000).
d) Mixed forms of crosslinking agents which contain both at least one aldehyde or carbonyl group and at least one group of the formula -Si(R¹)(R²)(R³), the radicals R¹ to R³ are defined as above under item c). An example of such a compound is: HC(O)CH₂Si(OCH₃)₃.
e) Crosslinking agents having at least one reversibly binding unit selected from the group consisting of aldehyde, carbonyl and silanes -Si(R¹)(R²)(R³) and at least one irreversibly binding unit from the group consisting of the epoxides, alkyl esters, acid chlorides, alkyl chlorides, alkyl bromides, and alkyl iodides. Here, the radicals R¹ to R³ are defined as above under item c). An example of such compounds is glycidyloxypropyltrimethoxysilane (GPTMS) CH₂(O)CHCH₂OCH₂CH₂CH₂Si(OCH₃)₃.

The preferred crosslinking agent is selected from the group consisting of the monoaldehydes, dialdehydes, and silicon compounds of the formula Si(R¹)(R²)(R³)(R⁴) as defined above under item c) or mixtures thereof. Glyoxal is particularly preferably used.

In step b), further additives and/or auxiliaries may be added to and mixed in the starting material in an amount of in each case 0.01 to 10% by weight, preferably 0.1 to 5% by weight, particularly preferably 0.2 to 3% by weight, based on the total mass of the water-moist cellulose ether composition. Preferably, a buffer in an amount of 0.1 to 2% by weight is added to the starting material and mixed in.

For example, buffer systems as described in EP 1 316 536 or EP 1 452 544 may be mentioned here as additives. WO 2007/019963, EP 1 313 770 and DE 103 52 081 also describe, for example, the addition of crosslinked and uncrosslinked polymeric additives to give a homogeneous mixture. These additives are used for changing the product properties and performance characteristics and should be sufficiently distributed in the feed material and subsequent product.

Further additives and/or auxiliaries in step b) may also be oxidizing agents, such as hydrogen peroxide, ozone, hypohalides, perborates or percarbonates; salts, such as alkali metal phosphates, sulphates or chlorides; buffer systems, such as phosphate, citrate and borate buffers; preservatives; dispersants; antifoams; air void formers; pigments, nonionic, anionic and cationic surfactants.

The compositions obtainable according to the above described process are also an object of the present invention. The inventive compositions have preferred characteristics as derivable from the above description. For example, the inventive compositions contain at least one cellulose ether and a crosslinking agent, the cellulose ether having a total DS (alkyl) of 1.40 to 2.00, a total MS (hydroxyethyl) of 0.29 to 1.05, and a total substitution degree DS+MS of at least 1.85. Preferably, the composition contains a cellulose ether which is an MHEHPC, EHEHPC or MEHEHPC having a DS (M and/or E) of 1.40 to 2.00, an MS (HE) of 0.21 to 0.50, an MS (HP) of 0.01 to 0.55, a total MS of 0.29 to 1.05, and a total DS+MS of at least 1.85.

The cellulose ether composition obtained after drying and grinding according to the inventive process has a preferred residual moisture content of less than 35% by weight, more preferably less than 20% by weight, more preferably less than 10% by weight and most preferably less than 5% by weight, based on the total mass of the cellulose ether composition. However, it is possible that the moisture content of the composition slightly differs from the moisture content before the grinding of the composition.

The cellulose ether composition obtained after drying and grinding in step c) of the inventive process has a preferred a bulk density, measured on a loose bed, of at least 350 g/l, preferably 400 g/l, more preferably at least 450 g/l, and most preferably at least 500 g/l.

The cellulose ether compositions which can be prepared according to the invention have very little surface swelling in aqueous dispersion. Surface swelling is to be understood as meaning the physical binding of water by the cellulose derivative without the cellulose derivative going into solution. In the case of small particles, in some cases it is not possible here to distinguish between surface swelling of the particle and swelling of the total particle.

A particularly practice-oriented method of determination for the surface swelling, expressed by the swelling value, consists in the preparation of a concentrated weakly acidic cellulose ether suspension and subsequent observation of the stirrability. The products according to the invention are generally still stirrable for at least one minute at a slurry concentration of 14 g, preferably of 16 g, more preferably of 18 g, particularly preferably 20 g or even 22 g, of cellulose ether/100 ml of water. In this method, it should be ensured that the physical binding of water is measured. This can be achieved by sufficiently delayed dissolution, for example by crosslinking with glyoxal. By establishing a weakly acidic pH, the glyoxal-treated cellulose ether is then prevented from going into solution. The exact method for the determination of the swelling value is described in the examples.

The compositions according to the invention generally have a swelling value of at least 14 g, preferably at least 16 g, more preferably of at least 18 g, and particularly preferably of at least 20 g or even 22 g, determined as specified in the examples section below.

The swelling value is determined on samples having delayed dissolution. The cellulose ether compositions according to the invention can of course also be marketed in a form which does not have delayed dissolution. In this case, the swelling test is only a means for determining the surface swelling on subsequently delayed samples without the test being hindered by the cellulose ether compositions going into solution.

The composition according to the invention preferably have a delay time of solubility of at least 18 minutes and preferably up to 60 minutes, more preferably of 20 to 50 minutes, and particularly preferably of 22 to 40 minutes, determined as specified in the examples section below.

The present invention also comprises the use of a cellulose ether or of a starting material containing such a cellulose ether as described herein for the preparation of a composition as described herein, especially a composition having a swelling value of at least 14 g and/or a delay time of solubility of at least 18 minutes and, optionally, a bulk density of at least 350 g/l.

The viscosity of a solution of the composition according to the invention, in particular one prepared by the process according to the invention, in water when an amount of 2% by weight (based on the solution) is used and at a shear rate of 2.55 1/s, determined by the measurement in a Haake Rotovisko VT 550 with a measuring body according to DIN 53019 at 20°C, may be 100 to 200 000 mPa.s. Preferably types having a viscosity of 1000 to 80 000 mPa.s, more preferably above 30 000 to 80 000 mPa.s, particularly preferably between 35 000 and 70 000 mPa.s, are used. The range of the HEC products having little surface swelling which were available to the user has to date been 3000 to 30 000 mPa.s. As a result of the compositions according to the invention, the range of higher viscosities from 30 000 to 80 000 mPa.s, particularly preferably between 35 000 and 70 000 mPa.s, has now been opened up. The viscosity is determined by measurement of an aqueous solution in a Haake Rotovisko VT 550 with a measuring body according to DIN 53019 at 20°C at the abovementioned concentration and the stated shear rate.

The cellulose ether compositions according to the invention are usually used as powder whose particle size x₅₀ is between 50 and 500,µm. The particle size x₅₀ is defined as that particle size starting from which 50% by weight of the composition is smaller than x and 50% of the composition is larger than x. Preferably, more than 98% by weight of the particles pass through a 300 sieve having a mesh size of 300 µm, particularly preferably more than 99% by weight, most preferably more than 99.5% by weight, determined in each case by sieve analysis according to DIN 66165. Preferably more than 40% by weight pass through a 125 µm sieve, particularly preferably more than 50% by weight, most preferably more than 60% by weight. Preferably less than 60% by weight pass through a 63 µm sieve, particularly preferably less than 50% by weight, most preferably less than 40% by weight.

The cellulose ether compositions according to the invention can be used as a mixture or in combination with other cellulose-based thickeners or synthetic thickeners in the below mentioned applications.

The present invention furthermore relates to the use of the compositions described herein in dispersion-bound construction material systems or in dispersion-bound coating materials

### EXAMPLES

### Processes used in the examples

### Common steps for processes A and B

Water was added to a water-moist filter cake of an MHEHPC in a mixer and said filter cake was moistened to the stated water content. The water contained 1 % by weight of glyoxal, based on the anhydrous cellulose ether, and 0.3% of a buffer mixture comprising sodium dihydrogen phosphate and disodium hydrogen phosphate. The phosphorus salts were present in the molar ratio of 1:1, calculated as anhydrous salts and based on the anhydrous cellulose ether. The solution comprising water, glyoxal and phosphate salts was added with stirring in the course of 2 minutes at room temperature of 21 ± 1°C to the water-moist cellulose ether, resulting in the desired total moisture content, which is stated in % by weight, based on the total mass. The total mixture was then stirred for 30 minutes. Thereafter, the total mixture was spread on a metal sheet and dried in a circulation drying oven overnight to a water content of less than 5% by weight.

### Process A

The cellulose ether composition obtained by moistening, treatment with glyoxal and drying was then precomminuted in a crusher (from Erweka) and comminuted in a laboratory mill of the Alpine UPZ 100 type having a sieve insert of 0.5 mm and a rigid 4-arm crossbeater as a grinding tool at 15 000 rpm.

### Process B

As for process A, but the cellulose ether composition was dried only to a water content of 25 ± 5% by weight.

### Determination of certain properties

The **viscosity** is determined by the measurement of an aqueous solution in a Haake Rotovisko VT 550 having a measuring body according to DIN 53019 at 20°C at the concentrations stated in each case and the shear rates stated in each case.

The **swelling value** is determined as follows: 0.200 g of NaH₂PO₄ is completely dissolved (visual check) in the course of about 3 min in a 400 ml glass beaker (high form) containing 100.00 g of tap water. The solution is stirred at room temperature of 20 ± 0.5°C using a commercially available magnetic stirrer (e.g. from IKA: IKA RET basic or IKAMAG RET) at initially 500 rpm with a commercially available Teflon-coated rod-like stirring magnet (40 x 8 mm). Thereafter, at time t = 0 (stopwatch), 2.000 g of the glyoxal-aftertreated cellulose ether composition to be investigated are first added rapidly in the centre of the beaker surface. The aftertreatment of the cellulose ether composition with glyoxal is effected by the process according to Example 5, pages 4/5 of EP1316563A1. Thereafter, a further 2.000 g of cellulose ether composition are added every 60 s, the speed of the magnetic stirrer being adjusted, i.e. increased. The test is stopped when the suspension is no longer stirrable. This is the case when the cellulose ether composition remains lying at least partly for longer than 1 minute on the surface. The maximum dispersible, i.e. still stirrable, amount of cellulose ether composition corresponds to the sum of the amount of cellulose ether added stepwise, including the last amount added, which was also completely stirred in. A proportion of the added amount which may also have been dispersed, although the remainder of the added amount could no longer be stirred in, is not taken into account.

The **bulk density** is determined as follows: a cylindrical body of 6.3 cm diameter and 3.2 cm height having a capacity of 0.1 I is filled by loosely pouring in the cellulose ether composition to be measured. The mass of the cellulose ether composition introduced is then determined to ± 1 gram.

The **delay time of solubility** is determined as follows: **Principle:** The product is disperged in a buffer mixture while stirring and the shear stress (τ) is obtained in dependency on time (relative viscosity). With help of the resulting graph, point (T) of strongest increase of viscosity is obtained by inserting two tangents and is taken into account for analysis. **Chemicals:** a) Mixing a buffer solution having a pH value of 6.6 +/- 0.1 of: 1 volume part standard buffer solution pH 7, e.g.: Merck 1.09437 or Riedel de Haen 33546-1EA, and 1 volume part standard buffer solution pH 6, e.g.: Merck 1.09439 or Riedel de Haen 33545-1 EA, and b) delayed product to be examined. **Apparatus:** a) computer-controlled viscotester of Thermohaake VT 500/501/550 RV 20, or b) computer-controlled measuring apparatus of Physica, c) wing stirrer "Diagonal" with respective connection (wing stirrer of ThermoHaake, length: 126 mm, wing width: 40 mm , wing height: 20 mm, hole diameter: 9 mm), d) laboratory balance, e) thermostat, and f) baker, 250 ml, high form. **Apparatus** parameter: The following parameter are defined for viscotester VT 500/501, 550 and viscosimeter RV 20 in combination with software RheoWinPro (version 2.81): **Segment 1 ("Maintaining Temperature"):** Parameter/rotation: Adjustment: 'CR'; Time, T' = 1 min; Shear rate, γ' = 300.1 1/s; Angle speed, Ω' = 300.0 1/min; **Segment 2:** Parameter/rotation: Adjustment 'CR'; Time, T' = 35 min; Shear rate, γ'= 130 1/s; Angle speed, Ω' = 129.9 1/min. **Data processing:** Measuring points: 100 linear data. **Temperature:** 23°C (start immediately). **Reproduction:** 4g +/- 0.1g of the delayed product are weighed. 196 ml +/- 2 ml of a buffer mixture are added. The viscotester is prepared and started. During segment 1 "Maintaining temperature", the sample is interspersed and regularly dispersed. Transfer to segment 2 is carried out automatically. During the measuring process, a temperature of 23 +/- 0.5°C in the baker has to be maintained. **Analysis:** After the end the of measuring period (here 35 min), the print (timely reproduction of shear stress) is analyzed. Two tangents are inserted with a lineal and their intersection is defined. Under the intersection point, the line vertical to the time axis (axis X) is marked in. The intersection point with the time axis shows the delay in minutes.

### Examples 1 to 10

According to the processes A or B
- an MHEHPC-1 (DS 1.61; MS_{HE} 0.34; MS_{HP} 0.25; viscosity 14 000 mPa.s) for the preparation of a corresponding composition was processed. The swelling values and bulk densities of the products were then determined as stated above. The viscosity is based on a solution of 2% by weight in water at a shear rate of 2.55 1/min.

| **Examples 1 to 10** **MHEHPC-1** | Process | Total moisture, % by weight | Swelling value, g | Bulk density, g/l |
|---|---|---|---|---|
| 1 (comp.) | **A** | 55.6 | **14** | 322 |
| 2 | **A** | **60.0** | **18** | **441** |
| 3 | **A** | **63.6** | **20** | **531** |
| 4 | **A** | **66.7** | **22** | **549** |
| 5 | **A** | **69.2** | **24** | **530** |
| 6 | **A** | **71.4** | **24** | **551** |
| 7 | **A** | **75.0** | **26** | **571** |
| 8 (comp.) | **B** | 55.6 | 20 | 309 |
| 9 | **B** | **63.6** | **26** | **443** |
| 10 | **B** | **69.2** | **28** | **499** |

As illustrated by Examples 1 to 10 the total moisture content of the cellulose ether composition has an influence to the swelling value. A moisture content of at least 60% and up to 85% by weight has a positive influence on the swelling value. The absolute swelling value and the most preferred absolute total moisture in % are also influenced by other process parameters, such as the degree of drying, which is different in process A or B. However, the Examples illustrate that within the range of at least 60 and up to 75 wt.-% total moisture very good swelling values can be achieved. In comparative Example 8 a good swelling value is achieved, however the bulk density is significant lower than in the Examples produced according to the comparable process.

### Examples 11 to 29

According to process A , respectively,
- an MHEC-1 (DS 1.35; MS(HE) 0.19; viscosity 37 000 mPa.s),
- an MHPC-1 (DS 1.54; MS(HP) 0.28, viscosity 11 000 mPa.s) and
- an MHEHPC-2 (DS 1.64; MS_{HE} 0.18; MS_{HP} 0.31; viscosity 21 000 mPa.s)
were processed for the preparation of a corresponding composition. Regarding swelling values, bulk densities and viscosities, cf. Examples 1 to 10.

| **Example 11-15** **MHEC-1** | Process | Total moisture, % by weight | Swelling value, g | Bulk density, g/l |
|---|---|---|---|---|
| 11 (comp.) | A | 63.6 | 14 | 277 |
| 12 (comp.) | A | 66.7 | 14 | 306 |
| 13 (comp.) | A | 69.2 | 12 | 336 |
| 14 (comp.) | A | 71.4 | 12 | 366 |
| 15 (comp.) | A | 75.0 | 14 | 428 |

| **Example 16-22** **MHPC-1** | Process | Total moisture, % by weight | Swelling value, g | |
|---|---|---|---|---|
| 16 (comp.) | A | 55.6 | 10 | |
| 17 (comp.) | A | 60.0 | 12 | |
| 18 (comp.) | A | 63.6 | 10 | |
| 19 (comp.) | A | 66.7 | 12 | |
| 20 (comp.) | A | 69.2 | 12 | |
| 21 (comp.) | A | 71.4 | 10 | |
| 22 (comp.) | A | 75.0 | 10 | |

| **Example 23-29** **MHEHPC-2** | Process | Total moisture, % by weight | Swelling value, g | Bulk density, g/l |
|---|---|---|---|---|
| 23 (comp.) | A | 55.6 | 12 | 242 |
| 24 (comp.) | A | 60.0 | 14 | 324 |
| 25 (comp.) | A | 63.6 | 14 | 301 |
| 26 (comp.) | A | 66.7 | 14 | 411 |
| 27 (comp.) | A | 69.2 | 14 | 438 |
| 28 (comp.) | A | 71.4 | 10 | 493 |
| 29 (comp.) | A | 75.0 | 14 | 484 |

In no case adequate swelling behaviour was achieved. Examples 11 to 29 illustrate that a MS (hydroxyethyl) of less than 0.21 leads to poor swelling values.

### Examples 30 to 36

According to process A
- an MHEHPC-3 (DS 1.61; MS_{HE} 0.34; MS_{HP}0.09; viscosity 18 000 mPa.s),
- an MHEHPC-4 (DS 1.66; MS_{HE} 0.36; MS_{HP} 0.16; viscosity 20 000 mPa.s) and
- an MHEHPC-5 (DS 1.61; MS_{HE} 0.35; MS_{HP} 0.30; viscosity 21 000 mPa.s)
were processed for the preparation of a corresponding composition. Regarding swelling values, bulk densities and viscosities, cf. Examples 1 to 10.

| **Example 30-36** **MHEHPC-3** | Process | Total moisture, % by weight | Swelling value, g | Bulk density, g/l |
|---|---|---|---|---|
| 30 (comp.) | **A** | 55.6 | 16 | 356 |
| 31 | **A** | **60.0** | **14** | **457** |
| 32 | **A** | **63.6** | **16** | **503** |
| 33 | **A** | **66.7** | **14** | **499** |
| 34 | **A** | **69.2** | **20** | **508** |
| 35 | **A** | **71.4** | **24** | **531** |
| 36 | **A** | **75.0** | **26** | **551** |

As illustrated by Examples 30 to 36 in the Table above the total moisture content of the cellulose ether composition has an influence to the swelling value. The absolute swelling value and the most preferred absolute total moisture in % are also influenced by other parameters, such as the specific type of cellulose ether. However, the Examples illustrate that within the range of at least 60 and up to 75 wt.-% total moisture from acceptable to very good swelling values in combination with high bulk densities can be achieved. In comparative Example 30 the bulk density is just acceptable but is significant lower than in the Examples 31 to 36 using the same MHEHPC.

| **Example 37-43** **MHEHPC-4** | Process | Total moisture, % by weight | Swelling value, g | Bulk density, g/l |
|---|---|---|---|---|
| 37 (comp.) | A | 55.6 | 10 | 231 |
| 38 | **A** | **60.0** | **16** | **378** |
| 39 | **A** | **63.6** | **18** | **468** |
| 40 | **A** | **66.7** | **20** | **529** |
| 41 | **A** | **69.2** | **22** | **548** |
| 42 | **A** | **71.4** | **22** | **556** |
| 43 | **A** | **75.0** | **28** | **573** |

The Examples in the Table above illustrated that within the range of at least 60 and up to 75 wt.-% total moisture from very good or even excellent swelling values in combination with high and very high bulk densities can be achieved.

| **Example 44-50** **MHEHPC-5** | Process | Total moisture, % by weight | Swelling value, g | Bulk density, g/l |
|---|---|---|---|---|
| 44 (comp.) | A | 55.6 | 10 | 245 |
| 45 | **A** | **60.0** | **14** | **292** |
| 46 | **A** | **63.6** | **16** | **361** |
| 47 | **A** | **66.7** | **16** | **494** |
| 48 | **A** | **69.2** | **16** | **533** |
| 49 | **A** | **71.4** | **16** | **551** |
| 50 | **A** | **75.0** | **26** | **551** |

As illustrated by Examples 44 to 50 in the Table above the total moisture content of the cellulose ether composition has an influence to the swelling value. The absolute swelling value and the most preferred absolute total moisture in % are also influenced by other parameters, such as the specific type of cellulose ether. However, the Examples illustrate that within the range of at least 60 and up to 75 wt.-% total moisture from acceptable to very good swelling values in combination with high bulk densities can be achieved.

### Example 51

The composition according to the invention in Example 51 differs in the MS_{HE}, in the viscosity, in the bulk density, in the product moisture and in the particle fineness from Example MT 3 from EP1127895. The cellulose ether composition according to the invention in Example 51 is obtained by moistening and treatment with glyoxal as described above in Process A, but then groundmill-dried in a screenless high-speed impact mill (from Altenburger Maschinen Jäckering GmbH, as in Example MT 3 from EP1127895) with a steam/air mixture as heat-transfer and transport gas.

Regarding swelling values, bulk densities and viscosities, cf. Example 1.

| **Example** | DS (M) | MS (HE) | MS (HP) | Viscosity mPa.s | Total moisture, % by weight | Swelling value, g | delay time of solubility, minutes |
|---|---|---|---|---|---|---|---|
| 51 | 1.52 | 0.31 | 0.33 | 18 000 | 75.8 | **22** | **30** |

| **End product** | MHEHPC example 51 |
|---|---|
| NaCl absolutely dry in % | 2.65 |
| Product moisture in % | 4.05 |
| Bulk density in g/l | 436 |
| Grading curve | |
| <315 µm in % | 100.00 |
| <250 µm in % | 99.76 |
| <200 µm in % | 97.68 |
| <160 µm in % | 91.33 |
| <125 µm in % | 83.19 |
| <100 µm in % | 74.07 |
| <63 µm in % | 48.87 |
| Viscosity V2 absolutely dry in mPa.s | 17 580 |
| Delay in min | 30 |

## Claims

1. Process for the preparation of a cellulose ether composition comprising at least one cellulose ether and a crosslinking agent, comprising the steps:
a) providing a starting material comprising at least one cellulose ether which has a total DS (alkyl) of 1.40 to 2.00, an MS (hydroxyethyl) of 0.21 to 1.05 and a total substitution degree DS+MS of at least 1.85,
b) adding at least one crosslinking agent and optionally water to the starting material and mixing in said crosslinking agent and optionally water, in an amount such that a water-moist cellulose ether composition is obtained, which composition has a moisture content of at least 60% and up to 85% by weight, based on the total mass of the water-moist cellulose ether composition, and
c) drying and grinding of the cellulose ether composition.

2. Process according to Claim 1, the cellulose ether being an MHEC, EHEC, MEHEC or MHEHPC.

3. Process according to claim 1 or 2, is an MHEHPC, EHEHPC or MEHEHPC having a DS (M and/or E) of 1.40 to 2.00, an MS (HE) of 0.21 to 0.50, an MS (HP) of 0.01 to 0.55, a total MS (HA) equal to MS (HE+HP) of 0.29 to 1.05, and a total substitution degree DS+MS of at least 1.85.

4. Process according to claim 1 or 2, the cellulose ether being an MHEC, EHEC, MEHEC or MEHPC and having a total DS (M and/or E) of 1.40 to 2.00, an MS (HE) of 0.21 to 1.05 and a total substitution degree DS+MS of at least 1.85.

5. Process according to any of the preceding claims wherein the cellulose ether composition does not comprise an ionic cellulose ether.

6. Process according to any of the preceding claims, the cellulose ether composition being dried in step c), prior to the grinding, to a residual moisture content of less than 35% by weight based on the total mass of the cellulose ether composition.

7. Process according to any of the preceding claims, 0.005 to 2% by weight of crosslinking agent, calculated as anhydrous and solvent-free substance and based on the dry starting material, being added and mixed in.

8. Process according to any of the preceding claims, the crosslinking agent being selected from the group consisting of monoaldehydes; dialdehydes, preferably glyoxal; silicon compounds of the formula Si(R¹)(R²)(R³)(R⁴), in which the radicals R¹ to R⁴, independently of one another, denote aryloxy, alkoxy, acyloxy, aryl, alkyl, alkenyl, N-silyl or O-silyl: and silicon compounds containing aldehyde or carbonyl groups or mixtures thereof.

9. A composition comprising at least one cellulose ether and a crosslinking agent preparable by the process according to any of the preceding claims.

10. The composition according to claim 9, having a residual moisture content of less than 35% by weight based on the total mass of the cellulose ether composition.

11. The composition according to claim 9 or 10, having a bulk density of at least 350 g/l measured on a loose bed.

12. The composition according to any of the claims 9 to 11, having a swelling value of at least 14 g determined as specified in the specification under the topic "Determination of certain properties".

13. The composition according to any of the claims 9 to 12, having a delay time of solubility of at least 18 minutes determined as specified in the specification under the topic "Determination of certain properties".

14. Use of a cellulose ether or a starting material containing a cellulose ether, the cellulose ether being specified as in any of the claims 1 to 5 for the preparation of a composition as specified as in any of the claims 9 to 13.

15. Use of a composition according to any of Claims 9 to 13 in dispersion-bound construction material systems or in dispersion-bound coating materials.
